# EUROPÄISCHE PATENTSCHRIFT

(11) **EP 3 559 535 B1**
(45) Veröffentlichungstag und Bekanntmachung des Hinweises auf die Patenterteilung: **08.03.2023**
(21) Anmeldenummer: 17818108.7
(22) Anmeldetag: 14.12.2017
(51) Int. Cl.: F16L 59/12, F16L 59/135, F16L 3/10, F16L 3/24

(54) **THERMISCH ENTKOPPELTER ROHRHALTER MIT HOHER MECHANISCHER BELASTBARKEIT**
THERMALLY DECOUPLED PIPE BRACKET WITH HIGH MECHANICAL LOADING CAPACITY
PORTE-TUYAU DÉCOUPLÉ THERMIQUEMENT PRÉSENTANT UNE CAPACITÉ DE CHARGE MÉCANIQUE ÉLEVÉE

(30) Priorität: 22.12.2016 DE 102016226024
(43) Veröffentlichungstag der Anmeldung: 30.10.2019
(73) Patentinhaber: BASF SE, 67056 Ludwigshafen am Rhein (DE)
(72) Erfinder: KURT, Ishak, 67056 Ludwigshafen (DE); DEBOLD, Ralf, 67056 Ludwigshafen (DE); HOFFMANN, Stefan, 67056 Ludwigshafen (DE); STUPPY, Sebastian Adolf, 67056 Ludwigshafen (DE)
(74) Vertreter: BASF IP Association
(86) Internationale Anmeldenummer: PCT/EP2017/082754
(87) Internationale Veröffentlichungsnummer: WO 2018/114567

(56) Entgegenhaltungen:
- DE-A1- 2 618 900
- DE-A1- 2 641 631
- DE-A1- 3 406 955
- DE-A1-102014 109 599
- DE-U1- 20 102 315
- US-A- 5 749 548
- US-A- 5 924 656

## Beschreibung

Die Erfindung betrifft einen Rohrhalter zur Halterung eines Rohres an einer Auflage umfassend zwei Fußstützen, die voneinander beanstandet und jeweils mit der Auflage verbindbar sind, ein Tragelement mit einem Steg, einer Rohraufnahme am oberen Ende des Steges und einem Fußteil am unteren Ende des Steges, wobei das Fußteil im Zwischenraum zwischen den Fußstützen angeordnet ist, sowie mindestens ein druckfestes Dämmelement, das zwischen der ersten Fußstütze und dem Fußteil sowie zwischen der zweiten Fußstütze und dem Fußteil angeordnet ist, wobei Fußstützen, Dämmelement und Fußteil durch mindestens ein Befestigungselement kraftschlüssig miteinander verbunden sind.

Gattungsgemäße Rohrhalter werden in diversen Anwendungen eingesetzt. Insbesondere beim Einsatz in der Kraftwerkstechnik oder der Prozessindustrie werden derartige Rohrhalter häufig verwendet, um Rohrleitungen, durch die warmgehende Medien strömen, an Anlagenteilen oder Infrastruktureinrichtungen zu befestigen. Als warmgehend werden diesbezüglich fluide Medien bezeichnet, deren Temperatur in der Rohrleitung höher ist als die Temperatur der Umgebung um die Rohrleitung herum. Insbesondere im Hinblick auf Energieeffizienz, in manchen Fällen aber auch aus Sicherheitsgründen, beispielsweise in potenziell explosionsgefährdeten Umgebungen, besteht die Notwendigkeit, den Wärmeübergang von dem in der Rohrleitung transportierten Medium an die Umgebung so gering wie möglich zu halten. Den Rohrhaltern, die die Verbindung zwischen der Rohrleitung und der Auflagefläche des Bauteils, an dem die Rohrleitung befestigt ist, darstellen, kommt dabei eine besondere Bedeutung zu.

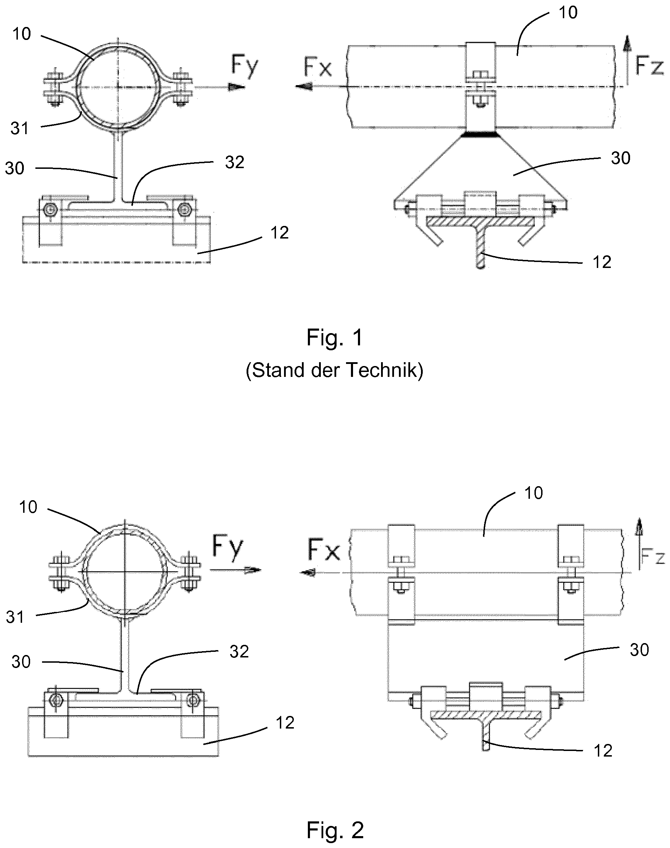

Weit verbreitet sind im Stand der Technik immer noch Rohrhalter aus Stahl, die unmittelbar sowohl an der Rohrleitung als auch an der Auflagefläche befestigt sind. Beispiele für derartige Rohrhalter sind in den Fig. 1 und 2 dargestellt. Aufgrund der hohen Wärmeleitfähigkeit des Werkstoffes Stahl ist der Wärmeübergang in diesen Fällen entsprechend groß.

Um eine Reduzierung des Wärmeübergangs zu erreichen, ist es im Stand der Technik bekannt, eine Schicht aus thermisch dämmendem Material an den Verbindungsstellen vorzusehen, beispielsweise zwischen der Rohrleitung und dem Rohrhalter oder zwischen dem Rohrhalter und der Auflagefläche des Bauteils, an dem der Rohrhalter befestigt ist. Diese Maßnahme führt zwar zu einer Verringerung des Wärmeübergangs vom Medium an die Umgebung, allerdings sind derartige Konstruktionen häufig fertigungstechnisch oder aus Kostengründen ungünstig. Ein weiterer Nachteil ist darin zu sehen, dass die eingesetzten Dämmmaterialien häufig weniger starr und verwindungssteif sind als der Werkstoff des Rohrhalters, was dazu führt, dass das gesamte System der Rohrhalterung im Vergleich zur nicht gedämmten Variante geringere Lasten aufnehmen kann. Abhängig von den aufzunehmenden Lasten, die im Wesentlichen durch Rohrdurchmesser, Rohrgeometrie, Werkstoffauswahl und das durch das Rohr strömende Medium bedingt sind, können derartig gedämmte Rohrhalter nur als Loslager eingesetzt werden, nicht aber als Festpunktlager, das in der Lage wäre, auch signifikante Kräfte in Richtung der Rohrleitungsachse aufzunehmen.

Während ein Loslager eine Bewegung des Rohres in alle Raumrichtungen zulässt, inklusive eines Abhebens des Rohres von dem Halter, erlaubt ein Führungslager lediglich eine Bewegung in Richtung der Rohrachse. Querbewegungen werden dabei durch Einfassungen des Rohres ebenso verhindert wie ein Abheben des Rohres vom Halter. Bei einem Festpunktlager schließlich ist auch die Bewegung in Richtung der Rohrachse unterbunden, was üblicherweise durch eine kraftschlüssige Verbindung zwischen dem Rohr und dem Rohrhalter erreicht wird.

Ein Rohrhaltersystem, das grundsätzlich auch als Festpunktlager geeignet ist und dabei eine gute Wärmedämmwirkung zeigt, ist in der Offenlegungsschrift DE 10 2014 109 599 A1 beschrieben. Die Rohrleitung wird dabei von einem Auflager gehalten, das aus zwei Formteilen besteht, die kraft- und formschlüssig miteinander verbunden sind. Der Vorteil der einfacheren Fertigung dieser Formteile, die beispielsweise aus einem Blech gestanzt und gebogen sein können, geht allerdings einher mit einer Verringerung der mechanischen Stabilität bei hohen axialen und radialen Lasten.

Es stellte sich die Aufgabe, gattungsgemäße Rohrhalter derart weiterzubilden, dass einerseits der Wärmeübergang von dem in der Rohrleitung transportierten Medium an die Umgebung weiter reduziert wird, und andererseits der Rohrhalter auch hohen mechanischen Lasten sowohl in axialer Richtung als auch Radial- und Querlasten standhält. Zudem sollte der Rohrhalter einfach zu fertigen und kostengünstig in der Herstellung sein.

Diese Aufgabe wird erfindungsgemäß gelöst durch einen Rohrhalter gemäß Anspruch 1. Vorteilhafte Ausgestaltungen des Rohrhalters sind in den Ansprüchen 2 bis 11 angegeben.

Der erfindungsgemäße Rohrhalter zur Halterung eines Rohres an einer Auflage umfasst zwei Fußstützen, die voneinander beabstandet und jeweils mit der Auflage verbindbar sind. Weiterhin umfasst er ein Tragelement mit einem Steg, einer Rohraufnahme am oberen Ende des Steges und einem Fußteil am unteren Ende des Steges, wobei das Fußteil im Zwischenraum zwischen den Fußstützen angeordnet ist. Rohraufnahme, Steg und Fußteil sind einstückig ausgebildet oder stoffschlüssig miteinander verbunden, beispielsweise verschweißt. Dies hat den Vorteil, dass das Tragelement - und somit der gesamte Rohrhalter - höhere Kräfte aufnehmen kann als ein Rohrhalter, dessen Tragelement aus mehreren Bauteilen besteht, wie dies beispielsweise aus dem Dokument DE 10 2014 109 599 A1 bekannt ist.

Des Weiteren umfasst der Rohrhalter mindestens ein druckfestes Dämmelement, das zwischen der ersten Fußstütze und dem Fußteil sowie zwischen der zweiten Fußstütze und dem Fußteil angeordnet ist. Fußstützen, Dämmelemente und Fußteil des Tragelements sind durch mindestens ein Befestigungselement kraftschlüssig miteinander verbunden.

Der Rohrhalter ist erfindungsgemäß ausgelegt, einer Bruchlast (gemäß Anhang J der Norm DIN EN 13480-3:2013-11) von mindestens 2,8 kN standzuhalten. Diese Auslegung erfordert eine Festlegung der für die Herstellung des Rohrhalters zu verwendenden Materialien und deren Dimensionierung, beispielsweise der Wandstärke von Flachblechen oder Winkelprofilblechen. Entsprechende Materialien und Berechnungsmethoden zur Auslegung sind dem Fachmann bekannt.

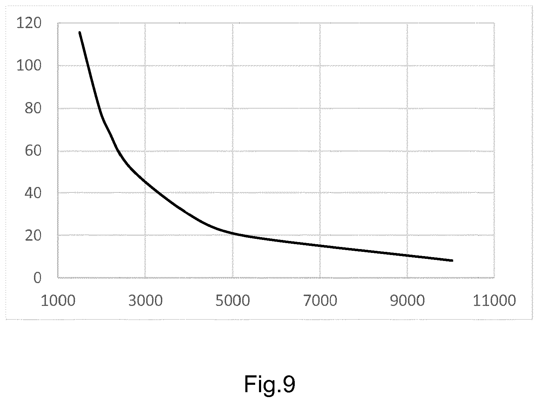

Erfindungsgemäß genügen die Auflagefläche (als "A" bezeichnet und in [mm²] angegeben) des Dämmelements an dem Fußteil und die Kaltdruckfestigkeit (als "K" bezeichnet und in [N/mm²] angegeben) des Dämmelements der Bedingung: K > 3·10⁶ · A^{(-1,39)}. (Alternative Schreibweise: K > 3 · 1.0e6 · A^(-1,39)). Fig. 9 zeigt den grafischen Verlauf, wobei auf der Abszissenachse die Auflagefläche in mm² aufgetragen ist, und auf der Ordinatenachse die Kaltdruckfestigkeit in N/mm². Unter der "Auflagefläche (A)" ist dabei die Fläche zu verstehen, an der das Dämmelement am Fußteil des Tragelements vollflächig anliegt. Bei Ausführungsformen, bei denen Dämmelemente und Fußteil an mehreren diskreten Flächen anliegen, bildet die Summe dieser Flächen die in obiger Bedingung anzusetzende Auflagefläche. Da das Dämmelement oder mehrere Dämmelemente sowohl zwischen Fußteil und erster Fußstütze als auch zwischen Fußteil und zweiter Fußstütze vorhanden ist oder sind, gibt es auch zwei Auflageflächen. Diese werden zur Berücksichtigung in obiger Bedingung jedoch nicht addiert, sondern die jeweils kleinere dieser beiden Auflageflächen verwendet. Bei Ausführungsformen, bei denen die Auflagefläche des Dämmelements am Fußteil größer ist als die korrespondierende Auflagefläche des Dämmelements an der Fußstütze, ist die kleinere Auflagefläche der Fußstütze anzusetzen.

Die oben genannte erfindungsgemäße Bedingung berücksichtigt, dass der Rohrhalter auf eine Bruchlast von mindestens 2,8 kN ausgelegt ist. Für Halter, die auf eine Mindest-Bruchlast von 6,4 kN ausgelegt sind, insbesondere Halter mit zwei separaten Rohraufnahmen, ist es bevorzugt, wenn die Bedingung K > 2·10⁶ · A^{(-1,28)} erfüllt ist, wobei K und A dieselbe Bedeutung wie in obiger Bedingung haben. (Alternative Schreibweise: K > 2 · 1.0e6 · A^(-1,28)).

Eine Wahl der Auflagefläche im erfindungsgemäßen Bereich in Abhängigkeit von der Kaltdruckfestigkeit eines ausgewählten Dämmmaterials bewirkt, dass hinreichende Kräfte in axialer und radialer Richtung übertragen werden können, ohne dass es zu Beschädigungen am Dämmelement kommt. Ferner kann die zur Kraftübertragung erforderliche Auflagefläche in Abhängigkeit von dem ausgewählten Dämmmaterial minimiert werden, was zu einer gewünschten Verminderung des Wärmeverlustes über den Rohrhalter beiträgt.

Der erfindungsgemäße Rohrhalter ist geeignet, sämtliche in der Prozessindustrie oder Kraftwerkstechnik üblichen Rohre aufzunehmen. Da er mechanisch hoch belastbar ist, ist er insbesondere für Rohrleitungen mit einem Nenndurchmesser im Bereich von DN 10 bis DN 300 mm geeignet. Der Nenndurchmesser (DN) bezieht sich dabei auf die Definitionen in der Public Available Specification PAS 1057-1 "Rohrklassen für verfahrenstechnische Anlagen" basierend auf der Norm DIN EN 13480.

Der Rohrhalter kann an allen üblichen Auflagen angebracht werden, beispielsweise an Stahlträgern. Die Befestigung des Rohrhalters an der Auflage erfolgt über die Fußstützen und kann durch eine entsprechende Gestaltung der Fußstützen an unterschiedliche Gegebenheiten angepasst werden.

Das Tragelement ist an seinem oberen Ende als Rohraufnahme zur lagernden Aufnahme des Rohres ausgebildet. Die lagernde Aufnahme kann in üblicher Weise gestaltet sein, beispielsweise in Form einer Rohrschelle. Bevorzugt wird das Rohr unmittelbar an der Rohraufnahme befestigt. Dies hat zwar den Nachteil, dass ein Wärmeübergang von der Rohraußenwand an das Tragelement stattfindet, bietet aber den Vorteil, dass größere Kräfte übertragen werden können bzw. das Rohr in seiner Position besser stabilisiert werden kann. Im Hinblick auf einen möglichst geringen Wärmeübergang vom Rohr zum Rohrhalter beträgt die axiale Ausdehnung der Rohraufnahme vorzugsweise nicht mehr als 150 mm, besonders bevorzugt nicht mehr als 100 mm, insbesondere nicht mehr als 50 mm je Rohraufnahme.

Dem Tragelement kommt hinsichtlich der mechanischen Stabilität des Rohrhalters eine wesentliche Bedeutung zu. Bevorzugt weist das Tragelement eine Dehngrenze R_{p0,2} (nach DIN EN 10088-3) von mindestens 190 MPa auf. Diese Wertebereiche gewährleisten eine hinreichende Festigkeit für die im praktischen Einsatz auftretenden hohen Beanspruchungen. Vorzugsweise ist das Tragelement aus Stahl gefertigt, besonders bevorzugt aus Edelstahl, insbesondere aus einem Edelstahl der Werkstoffnummer 1.4301 (nach DIN EN 10088-3). Dieser Werkstoff zeichnet sich durch eine geringe Wärmeleitfähigkeit und eine annähernd konstante Festigkeit bis zu Temperaturen im Bereich von 500°C aus. Bevorzugt ist das Tragelement aus einem Material gefertigt, dessen Wärmeleitfähigkeit weniger als 20 W/(m·K) beträgt.

Neben dem Tragelement ist für die mechanische Stabilität auch das Dämmelement von Bedeutung, da es für die Kraftübertragung zwischen erster Fußstütze, Fußstütze des Tragelements und zweiter Fußstütze sorgt. Bevorzugt ist das Dämmelement druckfest mit einer Kaltdruckfestigkeit (nach DIN EN 826) von mindestens 10 N/mm². Das Dämmelement kann einteilig oder mehrteilig ausgestaltet sein. Es kann aus einem einheitlichen oder aus unterschiedlichen Materialien gefertigt sein. Die Verwendung des Begriffes "Dämmelement" in der Einzahl bedeutet diesbezüglich keine Einschränkung. Bevorzugt weist das Dämmelement eine Wärmeleitfähigkeit von weniger als 0,5 W/(m·K) auf. Bevorzugte Materialien für das Dämmelement sind Kalziumsilikate, hochtemperaturbeständige Polymere, Laminate auf Basis von Glasfasern und hochtemperaturbeständigen Polymeren oder Laminate auf Basis von Isolierwerkstoffen wie Glimmerfraktionen und Silikonharzimprägnierungen.

In einer bevorzugten Ausführungsform ist das Dämmelement als mehrlagiger Verbund aufgebaut, wobei sich dämmende Schichten mit geringer Wärmeleitfähigkeit und stabilisierende Schichten aus druckfestem Material abwechseln.

Fußstützen, Dämmelement und Tragelement können je nach Bedarf unterschiedlich dimensioniert sein. Bevorzugt weist der Rohrhalter im Querschnitt senkrecht zur Rohrachse jedoch einen symmetrischen Aufbau auf.

Fußstützen, Dämmelement und Tragelement sind durch mindestens ein Befestigungselement kraftschlüssig miteinander verbunden. Das mindestens eine Befestigungselement oder die mehreren Befestigungselemente können aus herkömmlichen zur Befestigung geeigneten Bauelementen ausgewählt sein, beispielsweise Nieten, Schraubverbindungen, Schweißverbindungen. Bevorzugt handelt es sich bei den Befestigungselementen um Schraubverbindungen. Besonders bevorzugt sind Dämmelement und Tragelement zwischen den beiden Fußstützen mit einem Anzugsmoment von mindestens 100 Nm eingespannt.

Bevorzugt berührt das mindestens eine Befestigungselement das Fußteil des Tragelements nicht, um einen direkten Wärmeübergang vom Tragelement über das Befestigungselement auf die Fußstützen zu vermeiden. Bei stabförmigen Befestigungselementen wie Schrauben oder Nieten kann dies dadurch sichergestellt werden, dass die Bohrungen im Tragelement größer gewählt werden als der Durchmesser des Befestigungselements. Alternativ können Hülsen eingesetzt werden, die aus einem thermisch isolierenden Material hergestellt sind.

Weiterhin ist bevorzugt, zwischen dem mindestens einen Befestigungselement und den Fußstützen eine thermische Isolation vorzusehen, beispielsweise in Form thermisch isolierender Unterlegscheiben bei Schrauben als Befestigungselementen.

In einer bevorzugten Ausgestaltung des erfindungsgemäßen Rohrhalters weisen die beiden Fußstützen jeweils eine erste Fläche auf, die mit der Auflage verbindbar ist, sowie jeweils eine zweite Fläche, die sich im Wesentlichen senkrecht zur ersten Fläche in Richtung des Rohres erstreckt.

"Im Wesentlichen" bedeutet in diesem Zusammenhang, dass der Winkel zwischen der ersten Fläche und der zweiten Fläche nicht exakt 90° betragen muss. Geringe Abweichungen, beispielsweise um bis zu +/- 5°, werden noch als "im Wesentlichen senkrecht" und damit unter diese bevorzugte Ausgestaltung fallend angesehen.

Beispiele derart ausgestalteter Fußstützen sind Winkel- oder Profilelemente, die im Querschnitt ein L-Profil, T-Profil, H-Profil, ein Vierkantprofil oder ähnliche Profile aufweisen. Im Hinblick auf möglichst geringen Materialeinsatz bei gleichzeitig hoher mechanischer Stabilität sind die Fußstützen vorzugsweise als L-Profil ausgestaltet. Besonders bevorzugt ist dabei eine Anordnung, bei der die zweiten Flächen der Fußstützen im Wesentlichen parallel verlaufen und dadurch den Zwischenraum bilden, und sich die ersten Flächen der Fußstützen jeweils vom Zwischenraum weg nach außen erstrecken.

Die Fußstützen sind vorzugsweise aus einem Material mit hoher mechanischer Belastbarkeit gefertigt, beispielsweise aus Polymeren oder Stählen wie ferritischen oder Chrom-Nickel-Stählen. Die Materialeigenschaft der Wärmeleitfähigkeit ist bei der Auswahl für die Fußstützen von untergeordneter Bedeutung, da die Gestaltung des erfindungsgemäßen Rohrhalters einen Wärmeübergang von der Rohrleitung auf die Fußstützen weitestgehend verhindert.

Die Fußstützen können mit üblichen kraft-, form- oder stoffschlüssigen Verbindungsmitteln an der Auflage befestigt werden, beispielsweise mit Krallen, Schraubverbindungen, Nieten oder durch Verschweißen.

Das Fußteil des Tragelements ist über das Dämmelement mit den Fußstützen verbunden. Seine konstruktive Gestaltung beeinflusst somit die mechanischen Eigenschaften bezüglich der Kraftübertragung von der Rohrleitung zur Auflage.

Bevorzugt ist das Fußteil des Tragelements als Winkelprofil ausgebildet mit einer ersten Fläche, die im Wesentlichen parallel zur Auflage verläuft, und einer zweiten Fläche, die sich im Wesentlichen senkrecht zur ersten Fläche und im Wesentlichen parallel zur Rohrachse erstreckt. Besonders bevorzugt ist das Winkelprofil ein L-Profil oder ein T-Profil, insbesondere ein T-Profil. Die Ausgestaltung des Fußteils des Tragelements als Winkelprofil bewirkt im Zusammenspiel mit dem Dämmelement, gegen das es verspannt ist, eine erhöhte Steifigkeit und eine verbesserte Kraftaufnahme in alle Belastungsrichtungen.

Bei einer Ausgestaltung des Fußteils des Tragelements als Winkelprofil ist es bevorzugt, das Dämmelement derart zu dimensionieren, dass nach der Befestigung das Fußteil die Innenseiten der Fußstützen nicht direkt berührt, um einen Wärmeübergang zu vermeiden. Besonders bevorzugt beträgt der Abstand zwischen der ersten Fläche des Fußteils des Tragelements und der Innenseite der jeweiligen Fußstütze mindestens 1 mm.

Rohraufnahme, Steg und Fußteil als Bestandteile des Tragelements können auf unterschiedliche Weise miteinander verbunden sein. Erfindungsgemäß sind sie einstückig ausgebildet, beispielsweise aus einem Vollmaterial, oder stoffschlüssig miteinander verbunden, beispielsweise durch Verschweißen. Auch Kombinationen von Einstückigkeit und Stoffschluss als Verbindung sind möglich, beispielsweise eine einstückige Ausbildung von Steg und Fußteil und eine am oberen Ende des Steges stoffschlüssig verbundene Rohraufnahme. Auch können Rohraufnahme, Steg und/oder Fußteil jeweils aus mehreren Einzelteilen gebildet sein, die stoffschlüssig miteinander verbunden sind.

In einer vorteilhaften Ausführungsform des erfindungsgemäßen Rohrhalters ist die Verbindung zwischen dem Fußteil und der Rohraufnahme des Tragelements durch ein im Wesentlichen flächiges Bauteil als Steg gebildet. "Im Wesentlichen" ist diesbezüglich so zu verstehen, dass ein Bauteil mit Unebenheiten oder kleinere Erhebungen oder Vertiefungen noch als "flächig" angesehen wird. Ein Beispiel für ein flächiges Bauteil ist ein Flachstahl. Vorzugsweise wird die Fläche des Stegs möglichst geringgehalten. Konstruktion und Dimensionierung des Steges können den Anforderungen an die Kraftaufnahme entsprechend gestaltet werden, beispielsweise durch die Formgebung des Steges in axialer Richtung, z.B. als Rechteck oder als Trapez. Vorteile dieser Ausgestaltung sind neben einem geringen Materialverbrauch und Verarbeitungsaufwand auch ein geringer Wärmeübergang an die Umgebung. Weiterhin können Steg und Fußteil derart aufeinander abgestimmt und optimiert werden, dass sich eine hohe mechanische Stabilität bei geringem Wärmeverlust über den Rohrhalter einstellt. Diese Variante eignet sich insbesondere, wenn der Rohrhalter vorwiegend in axialer Richtung belastet wird und kaum Querlasten aufnehmen muss.

Für Anwendungen, bei denen auch signifikante Querlasten auftreten können, eignet sich eine alternative vorteilhafte Ausführungsform des erfindungsgemäßen Rohrhalters, bei der die Verbindung zwischen dem Fußteil und der Rohraufnahme des Tragelements durch ein Bauteil mit einem Winkelprofil als Steg gebildet ist. Das Winkelprofil kann beispielsweise ein L-Profil, T-Profil, H-Profil, ein Vierkantprofil oder ähnliches Profil sein. Bevorzugt ist ein L-Profil oder ein T-Profil, besonders bevorzugt ein T-Profil.

Weiterhin bevorzugt ist bei einer Ausführungsform, bei der das Fußteil des Tragelements ebenfalls als Winkelprofil ausgebildet ist mit einer ersten Fläche, die im Wesentlichen parallel zur Auflage verläuft, und einer zweiten Fläche, die sich im Wesentlichen senkrecht zur ersten Fläche und im Wesentlichen parallel zur Rohrachse erstreckt, die Verbindung zwischen dem Fußteil und der Rohraufnahme des Tragelements durch ein Bauteil mit einem Winkelprofil als Steg gebildet mit einer ersten Fläche, die parallel zur zweiten Fläche des Fußteils des Tragelements verläuft und einer zweiten Fläche, die zur ersten Fläche im Wesentlichen senkrecht verläuft. Vorzugsweise sind sowohl das Winkelprofil des Steges als auch das Winkelprofil des Fußteils als L-Profil oder T-Profil gestaltet, besonders bevorzugt als T-Profil.

In einer Weiterbildung des erfindungsgemäßen Rohrhalters umfasst das Tragelement zwei Rohraufnahmen zur lagernden Aufnahme des Rohres, wobei die beiden Rohraufnahmen über ein gemeinsames Fußteil miteinander verbunden sind. Hinsichtlich geeigneter und bevorzugter Ausgestaltungen der Rohraufnahmen und ihrer Verbindung zum Fußteil wird auf die obigen Ausführungen zu dem Rohrhalter mit nur einer Rohraufnahme verwiesen.

Besonders bevorzugt ist das Fußteil des Tragelements als Winkelprofil ausgebildet mit einer ersten Fläche, die im Wesentlichen parallel zur Auflage verläuft, und einer zweiten Fläche, die sich im Wesentlichen senkrecht zur ersten Fläche und im Wesentlichen parallel zur Rohrachse erstreckt, wobei die Verbindung zwischen dem Fußteil und der jeweiligen Rohraufnahme des Tragelements durch jeweils ein Bauteil mit einem Winkelprofil als Stege gebildet ist mit einer ersten Fläche, die parallel zur zweiten Fläche des Fußteils des Tragelements verläuft und einer zweiten Fläche, die zur ersten Fläche im Wesentlichen senkrecht verläuft.

Ganz besonders bevorzugt verlaufen die verbindenden Stege im Wesentlichen senkrecht zur Auflage in Richtung des Rohres und sind parallel zueinander, sodass das Tragelement in der Queransicht (senkrecht zur Rohrachse) ein U-Profil aufweist.

Bevorzugt ist die erste Fläche des Winkelprofils des Fußteils des Tragelements von der Auflage beabstandet. Der Abstand beträgt vorzugsweise von 1 bis 10 mm. Durch diese Maßnahme kann der Wärmeübergang vom Rohr über das Tragelement zur Auflage verringert werden.

Besonders bevorzugt ist bei dieser Ausgestaltung in dem Raum zwischen der ersten Fläche des Winkelprofils des Fußteils des Tragelements und der Auflage ein Dämmmaterial angeordnet, das insbesondere eine Wärmeleitfähigkeit von weniger als 0,5 W/(m·K) aufweist. Dadurch lässt sich der Wärmeübergang vom Rohr über das Tragelement zur Auflage weiter verringern.

In einer weiterhin bevorzugten Ausführungsform des erfindungsgemäßen Rohrhalters verläuft die zweite Fläche der Fußstütze im Wesentlichen parallel zur zweiten Fläche des Fußteils des Tragelements, und das Dämmelement ist zwischen den beiden zweiten Flächen mit einem Anzugsmoment von mindestens 100 Nm eingespannt.

In einer vorteilhaften Weiterbildung des erfindungsgemäßen Rohrhalters ist das Dämmelement an seinen Außenflächen von einer Ummantelung umgeben. Je nach Anwendungsfall und Aufgabenstellung umschließt die Ummantelung das Dämmelement teilweise oder vollständig.

Ein Vorteil der Ummantelung um das Dämmelement ist ein Schutz gegen Witterungseinflüsse, insbesondere Feuchtigkeit oder aggressive Medien. In diesem Fall ist das Dämmelement vorzugsweise vollständig von der Ummantelung umschlossen. Als Materialien für die Ummantelung sind geeignete Kunststoffe oder Metalle wie Edelstahl, verzinkter Stahl, Zink oder Aluminium bevorzugt.

Ein weiterer Vorteil der Ummantelung ist ein mechanischer Schutz des Dämmelements, z.B. gegen Stöße, Schläge oder dergleichen. In diesem Fall ist das Dämmelement vorzugsweise zumindest teilweise von der Ummantelung umschlossen.

Des Weiteren kann eine Ummantelung vorgesehen sein, die zwischen dem Dämmelement und der jeweiligen Fußstütze angeordnet ist und die das Dämmelement zumindest weiter als die Fußstütze abdeckt. Vorzugsweise deckt die Ummantelung das Dämmelement über die gesamte Seitenfläche ab, die der Fußstütze zugewandt ist. Diese Ausführungsform hat den Vorteil, dass die durch die Befestigungselemente aufgebrachten Druckkräfte gleichmäßiger über das Dämmelement verteilt werden, was der potenziellen Gefahr einer Beschädigung des Dämmelements im Bereich der Fußstütze vorbeugt.

Üblicherweise werden Rohrleitungen über ihre gesamte Länge mit Isolationsmaterial wie Mineral- oder Glaswolle gedämmt, um den Wärmeverlust an die Umgebung möglichst gering zu halten. Diese Isolationsschicht ist üblicherweise durch eine rohrförmige Ummantelung aus Metall gehalten und gegen Umwelteinflüsse geschützt. In einer vorteilhaften Ausgestaltung des erfindungsgemäßen Rohrhalters ist das Dämmelement vollständig von einer Ummantelung umgeben, und die Ummantelung ist derart gestaltet, dass sie dichtend an die rohrförmige Ummantelung der Rohrleitung anschließt.

Gegenüber aus dem Stand der Technik bekannten Rohrhaltern weist der erfindungsgemäße Rohrhalter den Vorteil auf, dass er hohe mechanische Lasten sowohl in Axial- als auch in Radial- und Querrichtung aufnehmen kann und dabei den Wärmeübergang von dem in der Rohrleitung transportierten Medium an die Umgebung minimiert. Der Vorteil wird umso größer, je höher die Temperatur des Mediums ist. Insbesondere kann der Rohrhalter auch als Festpunktlager eingesetzt werden, da er die Rohrleitung auch in axialer Richtung fixieren kann. Gegenüber im Folgenden sogenannten "Standardhaltern" gemäß Fig. 1 und 2 des Standes der Technik lassen sich durch erfindungsgemäße Rohrhalter bei vergleichbarer Kraftaufnahme wesentlich geringere Wärmeverluste erreichen, typischerweise in der Größenordnung von mindestens 50% bei einem zweischelligen Halter und mindestens 70% bei einem einschelligen Halter.

Im Gegensatz zu manchen aus dem Stand der Technik bekannten Rohrhaltern ist bei dem Rohrhalter gemäß der Erfindung das Fußteil des Tragelements in seiner Ausdehnung in weiten Bereichen frei wählbar, da es kaum Einschränkungen hinsichtlich seiner Konstruktion gibt. Diese Designfreiheit ermöglicht es, unter Berücksichtigung der erfindungsgemäßen Bedingung für das Verhältnis von Auflagefläche des Dämmelements an dem Fußteil und der Kaltdruckfestigkeit des Dämmelements, eine für die jeweils erforderliche Kraftaufnahme hinreichende Stabilität des Rohrhalters sicherzustellen, und gleichzeitig ein Dämmmaterial mit einem geringen Wärmeverlust auswählen zu können. Somit kann für sämtliche in der Prozesstechnik relevanten Einsatzgebiete jeweils individuell ein guter Kompromiss zwischen Kraftaufnahme und Wärmedämmung gefunden werden - was mit den im Stand der Technik bekannten Rohrhaltern in diesem Umfang bislang nicht möglich ist. Aufgrund des reduzierten Wärmeübergangs von dem in der Rohrleitung transportierten Medium an die Auflage, an der der Rohrhalter befestigt ist, kann eine geringere Oberflächentemperatur an der Auflage erreicht werden, was insbesondere im Hinblick auf den Einsatz des Halters in explosionsgefährdeten Umgebungen von großem Interesse ist.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten. Es zeigen:
- Fig. 1:: Querschnitt und Draufsicht eines einschelligen Standardhalters gemäß dem Stand der Technik
- Fig. 2:: Querschnitt und Draufsicht eines zweischelligen Standardhalters gemäß dem Stand der Technik
- Fig. 3:: Ansicht einer ersten Ausführungsform eines erfindungsgemäßen Rohrhalters
- Fig. 4:: Querschnitt der ersten Ausführungsform gemäß Fig. 3
- Fig. 5:: Ansicht einer zweiten Ausführungsform eines erfindungsgemäßen Rohrhalters
- Fig. 6:: Querschnitt der zweiten Ausführungsform gemäß Fig. 5
- Fig. 7:: Ansicht einer dritten Ausführungsform eines erfindungsgemäßen Rohrhalters
- Fig. 8:: Querschnitt der dritten Ausführungsform gemäß Fig. 7
- Fig. 9:: Grenzkurve der Kaltdruckfestigkeit in Abhängigkeit von der Auflagefläche des Dämmelements an dem Fußteil

### Liste der verwendeten Bezugszeichen

- 10: Rohr
- 12: Auflage
- 20: erste Fußstütze
- 21: zweite Fußstütze
- 30: Steg des Tragelements
- 31: Rohraufnahme des Tragelements
- 32: Fußteil des Tragelements
- 40: Dämmelement
- 50: Befestigungselement
- 60: Ummantelung

Fig. 1 zeigt im Querschnitt (links) und in der Draufsicht (rechts) einen einschelligen Standardhalter gemäß dem Stand der Technik. Der Rohrhalter umfasst ein Tragelement mit einem Steg 30, dessen oberes Ende mit einer Rohrschelle gemäß dem Stand der Technik als Rohraufnahme 31 verbunden ist. Das zu lagernde Rohr 10 wird von der Rohrschelle umfasst. An seinem unteren Ende ist der Steg 30 mit einem Fußteil 32 verbunden, wobei Steg 30 und Fußteil 32 im Querschnitt - also senkrecht zum Rohrverlauf - ein T-Profil bilden. Der Rohrhalter ist in dem dargestellten Beispiel an einem T-Träger als Auflage 12 befestigt. Dies entspricht einer häufig in der Praxis anzutreffenden Situation, bei der Rohrhalter beispielsweise an Trägern einer Rohrbrücke befestigt sind. Die Befestigung des Rohrhalters an der Auflage 12 erfolgt über ein Klemmteil, das sowohl am Fußteil 32 als auch an der Auflage 12 verspannt ist. Aufgrund der Tatsache, dass Tragelement, Klemmteil und Auflage üblicherweise aus einem Stahl gefertigt sind und alle Bauteile in unmittelbarem Kontakt miteinander stehen, weist der Standardhalter einen hohen Wärmeverlust auf, wenn die Temperatur des im Rohr fließenden Mediums signifikant von der Umgebungstemperatur um die Auflage 12 abweicht. Hinsichtlich der aufzunehmenden Kräfte wirkt sich der unmittelbare Kontakt der Bauteile jedoch positiv aus, da der Standardhalter geeignet ist, sowohl Kräfte in axialer Richtung (in Fig. 1 mit Fx bezeichnet) und in radialer Richtung (Fy), als auch Kräfte in vertikaler Richtung (Fz) aufzunehmen.

Fig. 2 zeigt im Querschnitt (links) und in der Draufsicht (rechts) einen zweischelligen Standardhalter gemäß dem Stand der Technik. Der Aufbau entspricht grundsätzlich dem des in Fig. 1 dargestellten einschelligen Halters mit dem Unterschied, dass das obere Ende des Steges 30 mit zwei separaten Rohrschellen als Rohraufnahmen 31 verbunden ist, und der Steg 30 als rechteckige Platte anstelle der Trapezform ausgebildet ist.

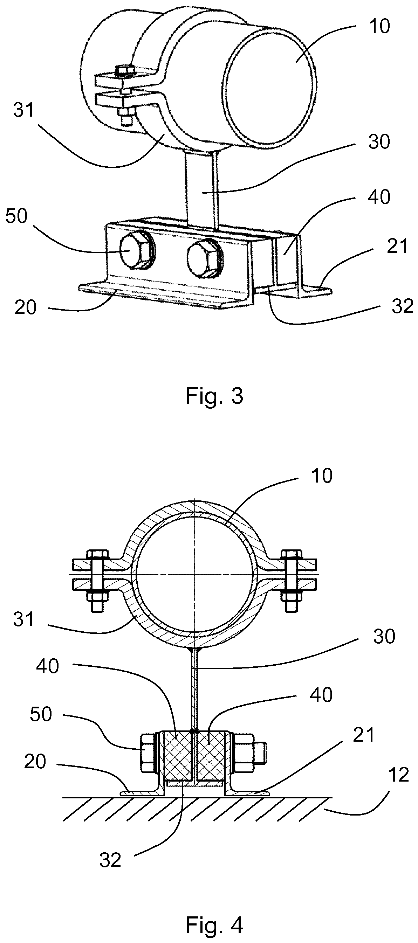

Fig. 3 zeigt schematisch in einer dreidimensionalen Ansicht eine erste Ausführungsform des erfindungsgemäßen Rohrhalters zur Halterung eines Rohres 10 an einer Auflage 12. Fig. 4 zeigt den Rohrhalter gemäß Fig. 3 im Querschnitt senkrecht zur Rohrachse. Der Rohrhalter umfasst eine erste Fußstütze 20 und eine zweite Fußstütze 21, die voneinander beabstandet sind. Beide Fußstützen sind jeweils mit der Auflage 12 verbindbar, beispielsweise verschraubbar. Der Rohrhalter umfasst ein Tragelement mit einem Steg 30, einer Rohraufnahme 31 am oberen Ende des Steges und einem Fußteil 32 am unteren Ende des Steges. In der dargestellten Ausführungsform ist die Rohraufnahme 31 als zweiteilige Rohrschelle zur lagernden Aufnahme des Rohres 10 ausgestaltet, wobei die untere Hälfte der Rohrschelle stoffschlüssig mit dem Steg 30 des Tragelements verbunden ist, im dargestellten Beispiel verschweißt. Der Steg 30 ist als im Wesentlichen flächiges Bauteil ausgebildet.

Das Fußteil 32 des Tragelements ist im Zwischenraum zwischen den beiden Fußstützen 20, 21 angeordnet. Das Fußteil 32 des Tragelements ist als Winkelprofil in Form eines T-Profils ausgebildet mit einer ersten Fläche, die im Wesentlichen parallel zur Auflage 12 verläuft, und einer zweiten Fläche, die sich im Wesentlichen senkrecht zur ersten Fläche und im Wesentlichen parallel zur Rohrachse erstreckt. Die erste Fläche des Winkelprofils ist von der Auflage 12 beabstandet. Das Fußteil 32 ist stoffschlüssig mit dem Steg 30 verbunden, im dargestellten Beispiel verschweißt.

Weiterhin umfasst der Rohrhalter ein druckfestes Dämmelement 40, das in der dargestellten Ausführungsform zweiteilig ist, wobei jeweils ein Teil des Dämmelements 40 zwischen der ersten Fußstütze 20 und dem Fußteil 32 sowie zwischen der zweiten Fußstütze 21 und dem Fußteil 32 angeordnet ist.

Die Fußstützen 20, 21, die beiden Teile des Dämmelements 40 und das Fußteil 32 sind durch zwei Schrauben als Befestigungselemente 50 kraftschlüssig miteinander verbunden.

Die beiden Teile des Dämmelements 40 sind so dimensioniert, dass sie den Raum zwischen der ersten Fläche des Winkelprofils des Fußteils 32 des Tragelements und den Oberkanten der Fußstützen 20, 21 gerade ausfüllen. In Querrichtung ist die Dimension der beiden Teile des Dämmelements so gewählt, dass nach erfolgter Befestigung die Kanten der ersten Fläche des Winkelprofils die Innenseiten der Fußstützen 20, 21 nicht direkt berühren. Die Wahl des Abstandes hängt im Wesentlichen davon ab, ob bei der Auslegung des Rohrhalters der Schwerpunkt auf der thermischen Entkopplung oder auf der mechanischen Stabilität liegt. Diesbezüglich ist in aller Regel ein Kompromiss zu suchen, da ein geringer Abstand eine bessere mechanische Stabilität bedeutet, aber auch eine höhere Wärmeübertragung als ein größerer Abstand. Im dargestellten Beispiel wurde ein geringer Abstand gewählt und der Rohrhalter somit auf mechanische Stabilität hin optimiert.

Die Auflagefläche (A in [mm²]) des Dämmelements 40 an dem Fußteil 32 ist so dimensioniert, dass sie der Bedingung K > 3·10⁶ · A^{(-1,39)} genügt, wobei mit "K" die Kaltdruckfestigkeit (in [N/mm²]) des ausgewählten Dämmelements bezeichnet ist. Typische Werte für die Kaltdruckfestigkeit sind beispielsweise 27 N/mm² bei Kalziumsilikat, ca. 300 N/mm² bei Laminaten auf Basis von Glasfasern, die mit hochtemperaturbeständigem Polymer gebunden sind, sowie ca. 400 N/mm² bei zu Laminaten verpressten Isolierwerkstoffen, die als wesentliche Bestandteile Glimmerfraktionen in Verbindung mit Silikonharzimprägnierungen enthalten.

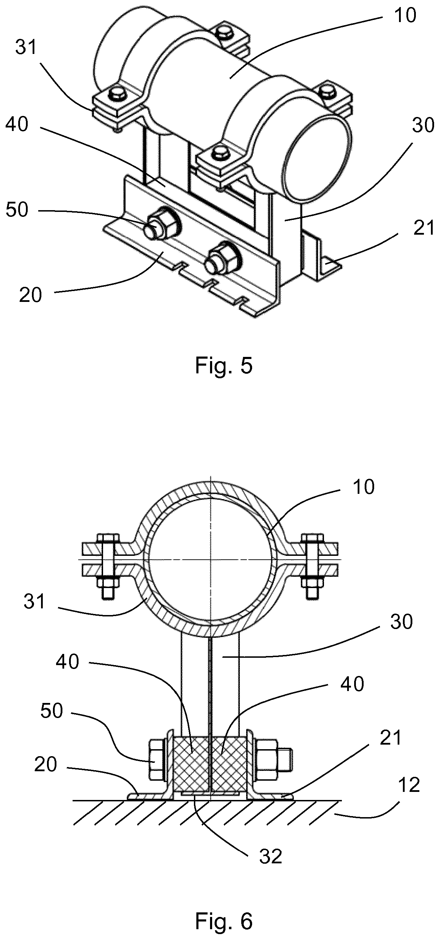

Fig. 5 zeigt schematisch in einer dreidimensionalen Ansicht eine zweite Ausführungsform des erfindungsgemäßen Rohrhalters zur Halterung eines Rohres 10 an einer Auflage. Fig. 6 zeigt den Rohrhalter gemäß Fig. 5 im Querschnitt senkrecht zur Rohrachse. Im Unterschied zum Rohrhalter gemäß Fig. 3 und 4 umfasst bei dieser Ausführungsform das Tragelement zwei Rohraufnahmen 31 zur lagernden Aufnahme des Rohres 10. Die beiden Rohraufnahmen 31 sind über ein gemeinsames Fußteil 32 miteinander verbunden. Das Fußteil 32 ist wie bei dem Rohrhalter gemäß Fig. 3 und 4 als Winkelprofil in Form eines T-Profils ausgestaltet. Die Stege 30 als Verbindung zwischen dem Fußteil 32 und der jeweiligen Rohraufnahme 31 des Tragelements sind ebenfalls als Winkelprofil in Form eines T-Profils ausgestaltet, wobei die jeweiligen Flächenanteile des Fußteils 32 und der Stege 30 stoffschlüssig miteinander verbunden sind, im dargestellten Beispiel verschweißt. Die beiden Stege 30 des Tragelements verlaufen im Wesentlichen senkrecht zur Auflage 12 in Richtung des Rohres 10 und sind parallel zueinander, sodass das Tragelement in der Queransicht (senkrecht zur Rohrachse) ein U-Profil aufweist.

Ähnlich wie der Rohrhalter gemäß Fig. 3 und 4 umfasst der in Fig. 5 dargestellte Rohrhalter ein zweiteiliges, druckfestes Dämmelement 40, wobei jeweils ein Teil des Dämmelements 40 zwischen der ersten Fußstütze 20 und dem Fußteil 32 des Tragelements sowie zwischen der zweiten Fußstütze 21 und dem Fußteil 32 des Tragelements angeordnet ist. Die Dimensionierung der beiden Teile des Dämmelements 40 entspricht der bei Fig. 3 und 4 beschriebenen, sodass auch dieser Rohrhalter auf möglichst große mechanische Stabilität ausgelegt ist. Aufgrund der doppelten T-Träger-Struktur ist dieser Rohrhalter auch zur Aufnahme hoher Querlasten geeignet.

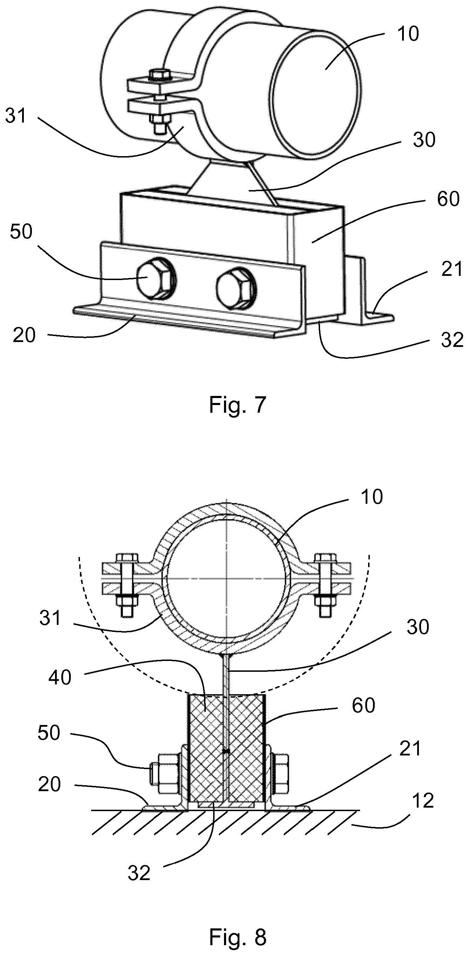

Fig. 7 zeigt schematisch in einer dreidimensionalen Ansicht eine dritte Ausführungsform des erfindungsgemäßen Rohrhalters zur Halterung eines Rohres 10 an einer Auflage. Fig. 8 zeigt den Rohrhalter gemäß Fig. 7 im Querschnitt senkrecht zur Rohrachse. In seinem Aufbau ähnelt der Rohrhalter gemäß dieser Ausführungsform dem in Fig. 3 und 4 gezeigten mit dem Unterschied, dass der Steg 30 des Tragelements in Längsrichtung des Rohres breiter ausgestaltet ist, wobei es sich ebenfalls um ein im Wesentlichen flächiges Bauteil handelt.

Auch diese Ausführungsform umfasst ein zweiteiliges, druckfestes Dämmelement 40, wobei jeweils ein Teil des Dämmelements 40 zwischen der ersten Fußstütze 20 und dem Fußteil 32 sowie zwischen der zweiten Fußstütze 21 und dem Fußteil 32 des Tragelements angeordnet ist. An seinen Außenflächen ist das Dämmelement von einer Ummantelung 60 umgeben, die in diesem Beispiel aus einem Stahlblech hergestellt ist. In Längs- und Querrichtung des Rohres umschließt die Ummantelung 60 das Dämmelement 40 vollständig. Nach oben ist das Dämmelement nicht von der Ummantelung umschlossen, da in diesem Beispiel der Rohrhalter dazu vorgesehen ist, von einer Rohrisolierung umgeben zu werden. Die Isolationsschicht um das Rohr sowie die rohrförmige Ummantelung der Isolationsschicht sind in Fig. 8 nicht dargestellt, sondern lediglich durch den gestrichelten Kreisbogen angedeutet. Nach Fertigstellung der Rohrummantelung schließt diese dichtend an die Ummantelung 40 des Dämmelements an, sodass auch das Dämmelement 40 des erfindungsgemäßen Rohrhalters gegen Witterungseinflüsse oder anderweitige Beschädigungen geschützt ist.

### Beispiel 1: Einschelliger Rohrhalter

Ein erfindungsgemäßer einschelliger Rohrhalter gemäß der in den Fig. 3 und 4 dargestellten Ausführungsform wurde hinsichtlich seiner thermischen Eigenschaften mit einem aus dem Stand der Technik bekannten Standardhalter gemäß Fig. 1 verglichen. Weiterhin wurde er verglichen mit einem entsprechenden Rohrhalter nach der Lehre der Offenlegungsschrift DE 10 2014 109 599 A1 gemäß der dortigen Fig. 2, nachfolgend als "gedämmter Halter" bezeichnet.

Bei der Beschreibung der Rohrhalter werden im Folgenden für alle Bauteile die Begriffe "Länge" für deren Ausdehnung in axialer Rohrrichtung, "Breite" für die dazu senkrechte radiale Ausdehnung und "Höhe" für die Ausdehnung in vertikaler Richtung von der Auflage 12 in Richtung des Rohres 10 verwendet.

Der Standardhalter war aus Stahl mit einer Materialstärke von 10 mm gefertigt. Die Länge des Fußteils 32 betrug 250 mm, seine Breite 100 mm. Der Steg 30 war trapezförmig gestaltet mit einer Höhe von 150 mm, einer Länge am Fußteil von 250 mm und einer Länge an der Rohrschelle von 50 mm. Die Rohrschelle hatte eine Länge von 50 mm bei unterschiedlichen Durchmessern für die unterschiedlichen Nennweiten der getesteten Rohrhalter.

Der erfindungsgemäße einschellige Rohrhalter entsprach in seinem Aufbau der in den Fig. 3 und 4 dargestellten Ausführungsform. Der Steg 30 hatte eine Höhe von 80 mm und eine Länge von 50 mm. Die Länge der Rohrschelle als Rohraufnahme 31 betrug ebenfalls 50 mm. Das Fußteil 32 war aus einem T-Profil mit einer Breite und Höhe von 50 mm in einer Länge von 210 mm gefertigt. Rohraufnahme, Steg und Fußteil waren jeweils aus Stahl mit einer Materialstärke von 5 mm hergestellt und durch Verschweißen stoffschlüssig miteinander verbunden. Als Fußstützen 20, 21 wurden L-Profile aus Stahl mit einer Materialstärke von 5 mm verwendet, die jeweils 250 mm lang, 60 mm hoch und 40 mm breit waren. Zwischen den Fußstützen und dem Fußteil wurde jeweils ein Dämmelement 40 aus Kalziumsilikat mit einer Länge von 210 mm, einer Breite von 30 mm und einer Höhe von 45 mm eingesetzt. Fußstützen, Dämmelemente und Fußteil wurden mit zwei Schrauben als Befestigungselemente 50 verbunden mit einem Anzugsmoment von jeweils 100 Nm pro Schraube. Die Auflagefläche des Dämmelements an dem Fußteil betrug 9450 mm². Die Kaltdruckfestigkeit der Dämmelemente betrug 27 N/mm².

Der getestete gedämmte Halter gemäß dem Stand der Technik entsprach in seinem Aufbau dem in den Fig. 1 und 2 des Dokuments DE 10 2014 109 599 A1 gezeigten Halter. Bei diesem Halter besteht das Tragelement aus zwei separaten Formteilen, die aus einem Stahlblech gestanzt und derart gebogen sind, dass die oberen Enden der Formteile jeweils eine Hälfte der Rohraufnahme bilden. Um das Tragelement zu bilden, sind die beiden Formteile über Aussparungen in Höhe der Rohraufnahme miteinander verschränkt zusammengesetzt. An die Rohraufnahme schließt sich der Steg an, der nahtlos in das Fußteil übergeht. Als Fußteil ist der Teil des Formteiles anzusehen, der im eingebauten Zustand von den Fußstützen überlappt wird. Die Materialstärke der Stahlbleche, aus denen die Formteile bestanden, betrug 3 mm, sodass der Steg und das Fußteil im eingebauten Zustand insgesamt eine Materialstärke von 6 mm aufwiesen. Die Höhe des Steges betrug 65 mm und die des Fußteils 55 mm bei einer Länge von 85 mm. Die Länge der Rohraufnahme betrug ebenfalls 85 mm. Die Fußstützen waren als L-Profile mit einer Höhe von 85 mm und einer Breite von 45 mm ausgebildet. Zwischen den Fußstützen und dem Fußteil wurde jeweils ein Dämmelement aus Kalziumsilikat mit einer Länge von 75 mm, einer Breite von 20 mm und einer Höhe von 75 mm eingesetzt.

Die Bestimmung der thermischen Eigenschaften, insbesondere der den Rohrhaltern zuzuschreibenden Wärmeverluste erfolgte an einem Rohrprüfstand. Zunächst wurden die Wärmeverluste an verschiedenen Prüfrohren mit unterschiedlichen Nennweiten bei unterschiedlichen Temperaturen ermittelt. Hierzu wurde das jeweilige Prüfrohr mit Mineralwolle-Dämmschalen mit einer Wärmeleitfähigkeit gemäß AGI Grenzkurve 4 gedämmt. Als Vergleichsbasis wurden die Wärmeverluste über die Rohrschalen ohne Rohrhalter ermittelt.

Anschließend wurden die zu testenden Rohrhalter jeweils separat an den Prüfrohren befestigt, die Mineralwolle-Dämmung wieder angebracht und erneut der Wärmeverlust ermittelt. Der Wärmeverlust (in Watt) des jeweiligen Rohrhalters ergab sich dann aus der Differenz des gemessenen Wärmeverlustes vermindert um den vorab ermittelten Wärmeverlust des Prüfrohres über die Rohrschalen ohne Rohrhalter. Die Werte sind in der folgenden Tabelle angegeben. Die Umgebungstemperatur während der Messungen betrug 20°C.

| Halter | Nennweite | Wärmeverlust über Halter [W] | | |
|---|---|---|---|---|
| | | T = 100°C | T = 200°C | T = 300°C |
| Standardhalter | DN 100 | 9,4 | 24,6 | 36,0 |
| Gedämmter Halter | DN 100 | 3,9 | 14,4 | 23,7 |
| erfindungsgemäß | DN 100 | 0,4 | 4,1 | 6,4 |
| Standardhalter | DN 25 | 12,9 | 32,9 | 56,4 |
| erfindungsgemäß | DN 25 | 3,9 | 12,9 | 23,4 |

### Beispiel 2: Zweischelliger Rohrhalter

In einer weiteren Testreihe wurde ein erfindungsgemäßer zweischelliger Rohrhalter gemäß der in den Fig. 5 und 6 dargestellten Ausführungsform mit einem entsprechenden zweischelligen Standardhalter gemäß Fig. 2 verglichen. Weiterhin wurde er verglichen mit einem entsprechenden Rohrhalter nach der Lehre der Offenlegungsschrift DE 10 2014 109 599 A1 gemäß der dortigen Fig. 3, nachfolgend als "gedämmter Halter" bezeichnet.

Der Standardhalter war aus Stahl mit einer Materialstärke von 10 mm gefertigt. Die Länge des Fußteils 32 betrug 250 mm, seine Breite 100 mm. Der Steg 30 war rechteckig gestaltet mit einer Höhe von 150 mm und einer Länge von 250 mm. In axialer Richtung an beiden Enden des Steges war jeweils eine Rohrschelle als Rohraufnahme angebracht. Die Rohrschellen hatten jeweils eine Länge von 50 mm bei unterschiedlichen Durchmessern für die unterschiedlichen Nennweiten der getesteten Rohrhalter.

Der erfindungsgemäße zweischellige Rohrhalter entsprach in seinem Aufbau der in den Fig. 5 und 6 dargestellten Ausführungsform. Der Rohrhalter umfasste zwei Rohrschellen als Rohraufnahmen 31, die jeweils eine Länge von 50 mm aufwiesen. Die beiden Rohraufnahmen waren über jeweils ein T-Profil der Dimension 50x50x6 mm als Steg mit einem gemeinsamen T-Profil der Dimension 50x50x6 mm als Fußteil verbunden. Die drei T-Profile waren aus Stahl gefertigt und sowohl untereinander als auch mit den Rohrschellen durch Verschweißen stoffschlüssig miteinander verbunden. Die Länge des Fußteils betrug 210 mm, die Steglänge 80 mm. Als Fußstützen 20, 21 wurden L-Profile aus Stahl mit einer Materialstärke von 6 mm verwendet, die jeweils 250 mm lang, 60 mm hoch und 40 mm breit waren. Zwischen den Fußstützen und dem Fußteil wurde jeweils ein Dämmelement 40 aus Kalziumsilikat mit einer Länge von 210 mm, einer Breite von 30 mm und einer Höhe von 45 mm eingesetzt. Fußstützen, Dämmelemente und Fußteil wurden - abweichend von der Darstellung in Fig. 5 - mit drei Schrauben als Befestigungselemente 50 verbunden mit einem Anzugsmoment von jeweils 100 Nm pro Schraube. Die Auflagefläche des Dämmelements an dem Fußteil betrug 9450 mm². Die Kaltdruckfestigkeit der Dämmelemente betrug 27 N/mm².

Der getestete gedämmte Halter gemäß dem Stand der Technik entsprach in seinem Aufbau dem in den Fig. 3 des Dokuments DE 10 2014 109 599 A1 gezeigten Halter. Die Ausführung der Formteile entsprach der oben beim einschelligen Halter beschriebenen, sodass sich der zweischellige Halter von dem einschelligen nur in der Anzahl der Formteile sowie der Länge der Fußstützen unterschied.

Die Vorgehensweise bei der Ermittlung der Wärmeverluste entsprach der zu obigem Beispiel 1 beschriebenen. Die Ergebnisse sind in untenstehender Tabelle wiedergegeben.

| Halter | Nennweite | Wärmeverlust über Halter [W] | | |
|---|---|---|---|---|
| | | T = 100°C | T = 200°C | T = 300°C |
| Standardhalter | DN 100 | 11,6 | 30,9 | 46,8 |
| Gedämmter Halter | DN 100 | 8,5 | 25,2 | 41,6 |
| erfindungsgemäß | DN 100 | 5,5 | 17,4 | 27,4 |

In einer weiteren Testreihe wurden die Rohrhalter dahingehend geprüft, welche maximalen Kräfte in axialer Rohrrichtung (Fx) und in radialer Richtung (Fy) sie aufnehmen können. Dazu wurden die Halter jeweils auf einer Auflage fest verschraubt und entweder in axialer oder radialer Richtung eine Kraft auf das in den Haltern eingespannte Rohr ausgeübt. Diese Versuche wurden bei einer Medientemperatur von 300°C durchgeführt.

Die nachfolgende Tabelle gibt die maximalen Kräfte (in kN) wieder, bevor es zu einem mechanischen Versagen der jeweiligen Halter kam:

| Kraft [kN] | Fx | Fy |
|---|---|---|
| Gedämmter Halter | 24,6 | 11,0 |
| erfindungsgemäß | 49,6 | 18,5 |

Sowohl der einschellige als auch der zweischellige Rohrhalter gemäß der Erfindung zeichnen sich gegenüber den im Stand der Technik bekannten Haltern durch eine deutlich höhere Kraftaufnahme bei gleichzeitig besserer Wärmedämmung aus.

## Patentansprüche

1. Rohrhalter zur Halterung eines Rohres (10) an einer Auflage (12), umfassend
- zwei Fußstützen (20, 21), die voneinander beabstandet und jeweils mit der Auflage (12) verbindbar sind,
- ein Tragelement mit einem Steg (30), einer Rohraufnahme (31) am oberen Ende des Steges und einem Fußteil (32) am unteren Ende des Steges, wobei Rohraufnahme (31), Steg (30) und Fußteil (32) einstückig ausgebildet oder stoffschlüssig miteinander verbunden sind, und wobei das Fußteil (32) im Zwischenraum zwischen den Fußstützen (20, 21) angeordnet ist,
- mindestens ein druckfestes Dämmelement (40), das zwischen der ersten Fußstütze (20) und dem Fußteil (32) sowie zwischen der zweiten Fußstütze (21) und dem Fußteil (32) angeordnet ist,
wobei Fußstützen (20, 21), Dämmelement (40) und Fußteil (32) durch mindestens ein Befestigungselement (50) kraftschlüssig miteinander verbunden sind, und der Rohrhalter ausgelegt ist, einer Bruchlast gemäß Anhang J der DIN EN 13480-3:2013-11 von mindestens 2,8 kN standzuhalten, **dadurch gekennzeichnet, dass** die Auflagefläche A des Dämmelements (40) an dem Fußteil (32), angegeben in [mm²], und die Kaltdruckfestigkeit K des Dämmelements gemäß DIN EN 826:2013-05, angegeben in [N/mm²], der Bedingung K > 3·10⁶· A^{(-1,39)} genügen.

2. Rohrhalter nach Anspruch 1, wobei die beiden Fußstützen (20, 21) jeweils eine erste Fläche aufweisen, die mit der Auflage (12) verbindbar ist, sowie jeweils eine zweite Fläche, die sich im Wesentlichen senkrecht zur ersten Fläche in Richtung des Rohres (10) erstreckt.

3. Rohrhalter nach Anspruch 1 oder 2, wobei das Fußteil (32) des Tragelements als Winkelprofil ausgebildet ist mit einer ersten Fläche, die im Wesentlichen parallel zur Auflage (12) verläuft, und einer zweiten Fläche, die sich im Wesentlichen senkrecht zur ersten Fläche und im Wesentlichen parallel zur Rohrachse erstreckt.

4. Rohrhalter nach Anspruch 3, wobei die Verbindung zwischen dem Fußteil (32) und der Rohraufnahme (31) des Tragelements durch ein im Wesentlichen flächiges Bauteil als Steg (30) gebildet ist.

5. Rohrhalter nach Anspruch 3, wobei die Verbindung zwischen dem Fußteil (32) und der Rohraufnahme (31) des Tragelements durch ein Bauteil mit einem Winkelprofil als Steg (30) gebildet ist mit einer ersten Fläche, die parallel zur zweiten Fläche des Fußteils (32) des Tragelements verläuft und einer zweiten Fläche, die zur ersten Fläche im Wesentlichen senkrecht verläuft.

6. Rohrhalter nach mindestens einem der Ansprüche 1 bis 5, wobei das Tragelement zwei Rohraufnahmen (31) zur lagernden Aufnahme des Rohres (10) umfasst, die über ein gemeinsames Fußteil (32) miteinander verbunden sind.

7. Rohrhalter nach Anspruch 6, wobei das Fußteil (32) des Tragelements als Winkelprofil ausgebildet ist mit einer ersten Fläche, die im Wesentlichen parallel zur Auflage (12) verläuft, und einer zweiten Fläche, die sich im Wesentlichen senkrecht zur ersten Fläche und im Wesentlichen parallel zur Rohrachse erstreckt, und wobei die Verbindung zwischen dem Fußteil (32) und der jeweiligen Rohraufnahme (31) des Tragelements durch jeweils ein Bauteil mit einem Winkelprofil als Stege (30) gebildet ist mit einer ersten Fläche, die parallel zur zweiten Fläche des Fußteils (32) des Tragelements verläuft und einer zweiten Fläche, die zur ersten Fläche im Wesentlichen senkrecht verläuft.

8. Rohrhalter nach mindestens einem der Ansprüche 3 bis 7, wobei die erste Fläche des Winkelprofils des Fußteils (32) des Tragelements von der Auflage (12) beabstandet ist.

9. Rohrhalter nach mindestens einem der Ansprüche 3 bis 8, wobei die zweite Fläche der Fußstütze (20, 21) im Wesentlichen parallel zur zweiten Fläche des Fußteils (32) des Tragelements verläuft, und wobei das Dämmelement (40) zwischen den beiden zweiten Flächen mit einem Anzugsmoment von mindestens 100 Nm eingespannt ist.

10. Rohrhalter nach mindestens einem der Ansprüche 1 bis 9, wobei das Dämmelement (40) an seinen Außenflächen zumindest teilweise von einer Ummantelung (60) umgeben ist.

11. Rohrhalter nach mindestens einem der Ansprüche 1 bis 10, der ausgelegt ist, einer Bruchlast gemäß Anhang J der DIN EN 13480-3:2013-11 von mindestens 6,4 kN standzuhalten, **dadurch gekennzeichnet, dass** die Auflagefläche A des Dämmelements (40) an dem Fußteil (32), angegeben in [mm²], und die Kaltdruckfestigkeit K des Dämmelements gemäß DIN EN 826:2013-05, angegeben in [N/mm²], der Bedingung K > 2·10⁶ · A^{(-1,28)} genügen.

## Claims

1. Pipe bracket for mounting a pipe (10) on a support (12), comprising
- two foot stands (20, 21) which are mutually spaced apart and in each case connectable to the support (12) ;
- a support element having a web (30), a pipe receptacle (31) at the upper end of the web and a foot part (32) at the lower end of the web, wherein the pipe receptacle (31), the web (30) and the foot part (32) are integrally configured or connected to one another in a materially integral manner, and wherein the foot part (32) is disposed in the intermediate space between the foot stands (20, 21);
- at least one pressure-resistant insulation element (40) which is disposed between the first foot stand (20) and the foot part (32), and between the second foot stand (21) and the foot part (32);
wherein the foot stands (20, 21), the insulation element (40) and the foot part (32) by way of at least one fastening element (50) are connected to one another in a force-fitting manner, and the pipe bracket, according to appendix J of DIN EN 13480-3:2013-11, is conceived to withstand a rupture load of at least 2.8 kN, **characterized in that** the support face A of the insulation element (40) on the foot part (32), stated in [mm²], and the cold compression strength K of the insulation element according to DIN EN 826:2013-05, stated in [N/mm²], meet the condition K > 3·10⁶ · A^{(-1.39)}.

2. Pipe bracket according to Claim 1, wherein the two foot stands (20, 21) have in each case a first face which is connectable to the support (12), and in each case a second face which in the direction of the pipe (10) extends so as to be substantially perpendicular to the first face.

3. Pipe bracket according to Claim 1 or 2, wherein the foot part (32) of the support element is configured as an angle section having a first face which runs so as to be substantially parallel to the support (12), and a second face which extends so as to be substantially perpendicular to the first face and substantially parallel to the pipe axis.

4. Pipe bracket according to Claim 3, wherein the connection between the foot part (32) and the pipe receptacle (31) of the support element by a substantially planar component is formed as a web (30) .

5. Pipe bracket according to Claim 3, wherein the connection between the foot part (32) and the pipe receptacle (31) of the support element by a component having an angle section is formed as a web (30) having a first face which runs so as to be parallel to the second face of the foot part (32) of the support element, and a second face which runs so as to be substantially perpendicular to the first face.

6. Pipe bracket according to at least one of Claims 1 to 5, wherein the support element comprises two pipe receptacles (31) for receiving in a bearing manner the pipe (10), said two pipe receptacles (31) being connected to one another by way of a common foot part (32).

7. Pipe bracket according to Claim 6, wherein the foot part (32) of the support element is configured as an angle section having a first face which runs so as to be substantially parallel to the support (12), and a second face which extends so as to be substantially perpendicular to the first face and substantially parallel to the pipe axis, and wherein the connection between the foot part (32) and the respective pipe receptacle (31) of the support element, in each case by a component having an angle section, is formed as webs (30) having a first face which runs so as to be parallel to the second face of the foot part (32) of the support element, and a second face which runs so as to be substantially perpendicular to the first face.

8. Pipe bracket according to at least one of Claims 3 to 7, wherein the first face of the angle section of the foot part (32) of the support element is spaced apart from the support (12).

9. Pipe bracket according to at least one of Claims 3 to 8, wherein the second face of the foot stand (20, 21) runs so as to be substantially parallel to the second face of the foot part (32) of the support element, and wherein the insulation element (40) by way of a tightening torque of at least 100 Nm is clamped between the two second faces.

10. Pipe bracket according to at least one of Claims 1 to 9, wherein the insulation element (40) on the external faces thereof is at least partially surrounded by a casing (60).

11. Pipe bracket according to at least one of Claims 1 to 10, which according to appendix J of DIN EN 13480-3:2013-11 is conceived to withstand a rupture load of at least 6.4 kN, **characterized in that** the support face A of the insulation element (40) on the foot part (32), stated in [mm2], and the cold compression strength K of the insulation element according to DIN EN 826:2013-05, stated in [N/mm2] meet the condition K > 2·10⁶ · A^{(-1.28)}.

## Revendications

1. Porte-tuyau pour maintenir un tuyau (10) sur un support (12), comprenant
- deux repose-pieds (20, 21) qui sont espacés l'un de l'autre et qui peuvent être reliés chacun au support (12),
- un élément porteur comprenant une entretoise (30), un logement de tuyau (31) à l'extrémité supérieure de l'entretoise et une partie de pied (32) à l'extrémité inférieure de l'entretoise, dans lequel le logement de tuyau (31), l'entretoise (30) et la partie de pied (32) sont réalisés en une seule pièce ou sont reliés entre eux par liaison de matière, et dans lequel la partie de pied (32) est agencée dans l'espace intermédiaire entre les repose-pieds (20, 21),
- au moins un élément isolant résistant à la pression (40), qui est agencé entre le premier repose-pied (20) et la partie de pied (32) ainsi qu'entre le deuxième repose-pied (21) et la partie de pied (32),
les repose-pieds (20, 21), l'élément isolant (40) et la partie de pied (32) étant reliés entre eux à force par au moins un élément de fixation (50), et le porte-tuyau étant conçu pour résister à une charge de rupture selon l'annexe J de la norme DIN EN 13480-3:2013-11 d'au moins 2,8 kN, **caractérisé en ce que** la surface d'application A de l'élément isolant (40) sur la partie de pied (32), indiquée en [mm²], et la résistance à la pression à froid K de l'élément isolant selon la norme DIN EN 826:2013-05, indiquée en [N/mm²], satisfont à la condition K > 3·10⁶·A^{(-1.39)}.

2. Porte-tuyau selon la revendication 1, dans lequel les deux repose-pieds (20, 21) présentent chacun une première surface qui peut être reliée au support (12), ainsi que chacun une deuxième surface qui s'étend essentiellement perpendiculairement à la première surface en direction du tuyau (10).

3. Porte-tuyau selon la revendication 1 ou 2, dans lequel la partie de pied (32) de l'élément porteur est réalisée sous forme de profilé angulaire avec une première surface qui s'étend essentiellement parallèle au support (12) et une deuxième surface qui s'étend essentiellement perpendiculairement à la première surface et essentiellement parallèlement à l'axe du tuyau.

4. Porte-tuyau selon la revendication 3, dans lequel la liaison entre la partie de pied (32) et le logement de tuyau (31) de l'élément porteur est formée par un composant essentiellement plat en tant qu'entretoise (30) .

5. Porte-tuyau selon la revendication 3, dans lequel la liaison entre la partie de pied (32) et le logement de tuyau (31) de l'élément porteur est formée par un composant comportant un profilé angulaire en tant qu'entretoise (30) avec une première surface qui s'étend parallèlement à la deuxième surface de la partie de pied (32) de l'élément porteur et une deuxième surface qui s'étend essentiellement perpendiculairement à la première surface.

6. Porte-tuyau selon au moins l'une quelconque des revendications 1 à 5, dans lequel l'élément porteur comprend deux logements de tuyau (31) pour le logement de montage du tuyau (10), qui sont reliés entre eux par l'intermédiaire d'une partie de pied commune (32).

7. Porte-tuyau selon la revendication 6, dans lequel la partie de pied (32) de l'élément porteur est réalisée sous forme de profilé angulaire avec une première surface qui s'étend essentiellement parallèlement au support (12) et une deuxième surface qui s'étend essentiellement perpendiculairement à la première surface et essentiellement parallèlement à l'axe du tuyau, et dans lequel la liaison entre la partie de pied (32) et le logement de tuyau (31) respectif de l'élément porteur est formée par un composant respectif comportant un profilé angulaire en tant qu'entretoises (30) avec une première surface qui s'étend parallèlement à la deuxième surface de la partie de pied (32) de l'élément porteur et une deuxième surface qui s'étend essentiellement perpendiculairement à la première surface.

8. Porte-tuyau selon au moins l'une quelconque des revendications 3 à 7, dans lequel la première surface du profilé angulaire de la partie de pied (32) de l'élément porteur est espacée du support (12).

9. Porte-tuyau selon au moins l'une quelconque des revendications 3 à 8, dans lequel la deuxième surface du repose-pied (20, 21) s'étend essentiellement parallèlement à la deuxième surface de la partie de pied (32) de l'élément porteur, et dans lequel l'élément isolant (40) est serré entre les deux deuxièmes surfaces avec un couple de serrage d'au moins 100 Nm.

10. Porte-tuyau selon au moins l'une quelconque des revendications 1 à 9, dans lequel l'élément isolant (40) est au moins partiellement entouré d'une enveloppe (60) sur ses surfaces extérieures.

11. Porte-tuyau selon au moins l'une quelconque des revendications 1 à 10, qui est conçu pour résister à une charge de rupture selon l'annexe J de la norme DIN EN 13480-3:2013-11 d'au moins 6,4 kN, **caractérisé en ce que** la surface d'application A de l'élément isolant (40) sur la partie de pied (32), indiquée en [mm²], et la résistance à la pression à froid K de l'élément isolant selon la norme DIN EN 826:2013-05, indiquée en [N/mm²], satisfont à la condition K > 2·10⁶·A^{(-1,28)}.
